# EUROPEAN PATENT SPECIFICATION

(11) **EP 2 028 038 B1**
(45) Date of publication and mention of the grant of the patent: **17.10.2012**
(21) Application number: 08159914.4
(22) Date of filing: 08.07.2008
(51) Int. Cl.: B60N 2/30

(54) **Removable backrest for industrial or commercial vehicle cab interior, and vehicle cab provided with such removable backrest**
Abnehmbare Rückenlehne für das Kabineninnere eines industriellen oder kommerziellen Fahrzeugs und Fahrzeugkabine mit solch einer abnehmbaren Rückenlehne
Dossier amovible pour intérieur de cabine de véhicule industriel ou commercial et cabine de véhicule dotée de tels dossiers amovibles

(30) Priority: 09.07.2007 IT MI20071367
(43) Date of publication of application: 25.02.2009
(73) Proprietor: IVECO S.p.A., 10156 Torino (IT)
(72) Inventor: Raviola, Claudio, 10040, RIVALTA DI TORINO (IT); Guarino, Salvatore, 10044, PIANEZZA (IT)
(74) Representative: Borsano, Corrado

(56) References cited:
- DE-A1- 3 507 529
- DE-A1- 10 340 494
- DE-A1- 19 518 393
- DE-C1- 10 216 149
- FR-A- 2 761 309
- GB-A- 2 128 473

## Description

The present invention relates to a removable backrest for industrial or commercial vehicle cab interior, and vehicle cab provided with such removable backrest. Such a device is shown in document GB 2 128 473.

It is known that industrial vehicle cabs, specifically those for long-haul trucks, are generally provided with berths, located in the zone behind the seats, to allow the driver or the passenger to rest behind the seat itself.

Said known bunks consist of a supporting structure, possibly divided into several parts, connected to the vehicle cab, possibly in tipping or removable manner, which accommodates one or more mattresses supported by an elastic supporting net.

A problem however arises because the presence of rear berths may not be sufficient to ensure an adequate level of comfort, especially in the case in which either the driver or the passenger wish to assume seated positions in other points, inside the rear part of the cab, e.g. to watch programs on the onboard television or to read or eat.

It is the object of the present invention to indicate a removable backrest for industrial or commercial vehicle cab interior which solves the aforesaid problems.

It is the object of the present invention a removable backrest for a vehicle cab interior, especially an industrial or commercial vehicle, characterised in that it essentially consists of two parts, one part of larger volume and one part a smaller volume; said two parts being connected together on a front median line; said smaller volume part being hinged and able to turn on an intermediate front line, so that when it is turned upwards it fills the retraction space of the shape of said larger volume part, so as to mate with the later.

It is particular object of the present invention a removable backrest for industrial or commercial vehicle cab interior, and a vehicle cab provided with said removable backrest, as described in better detail in the claims which form integral part of the present invention.

Objects and advantages of the present invention will be apparent from the detailed description that follows of an example of embodiment of the same, and of its variants, and the accompanying drawings by the way of non-limitative example, in which:

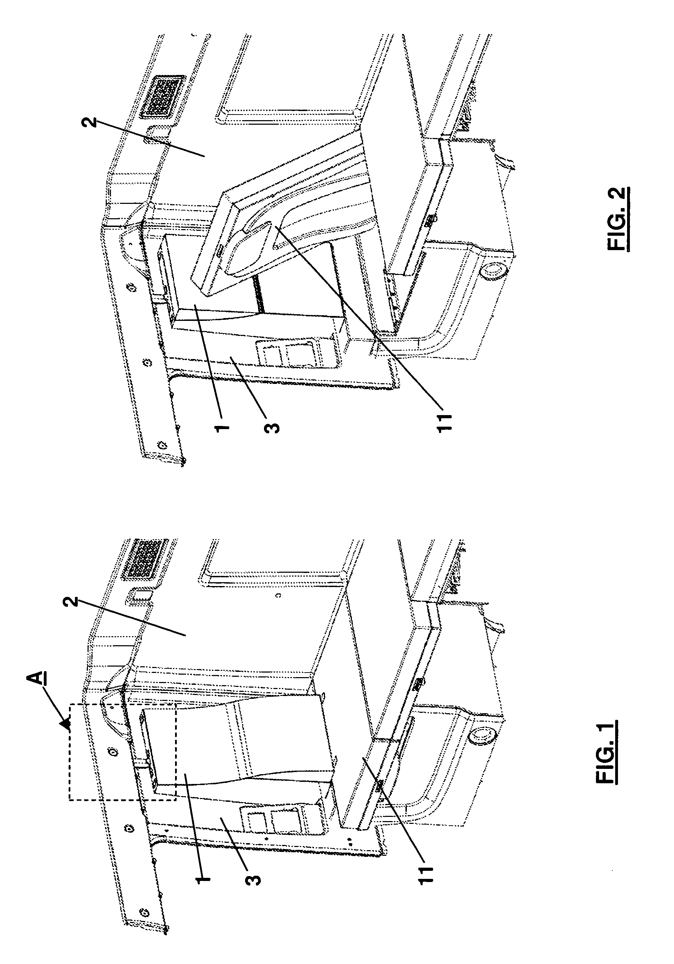

figures 1 and 2 show a part of a vehicle cab interior in which a removable backrest object of the invention is positioned with the smaller volume part tipped respectively downwards and upwards;

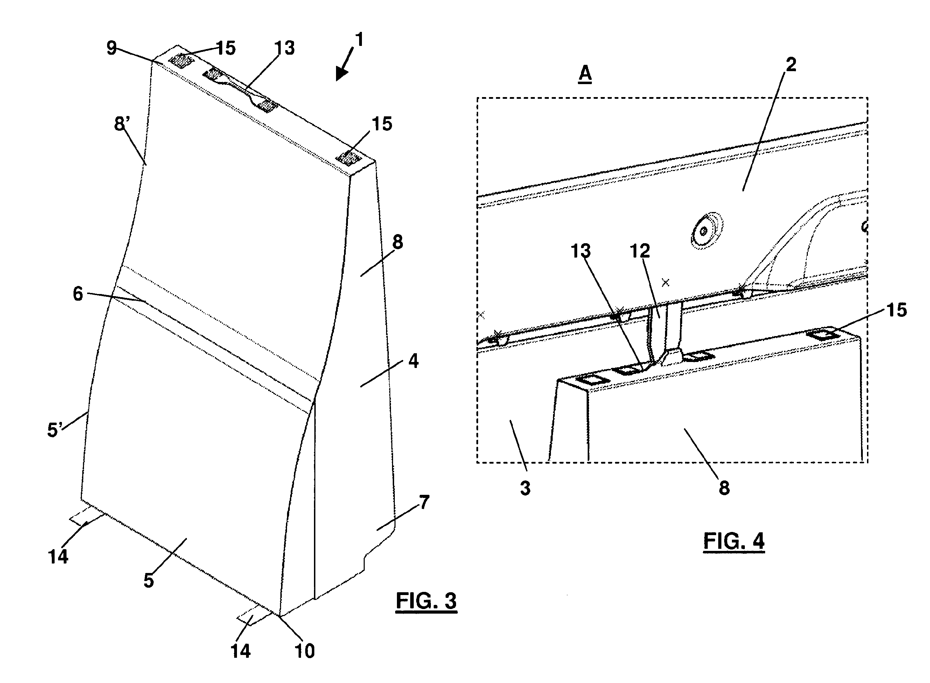

figure 3 shows a perspective view of the removable backrest object of the invention;
figure 4 shows a magnification of part A in figure 1;

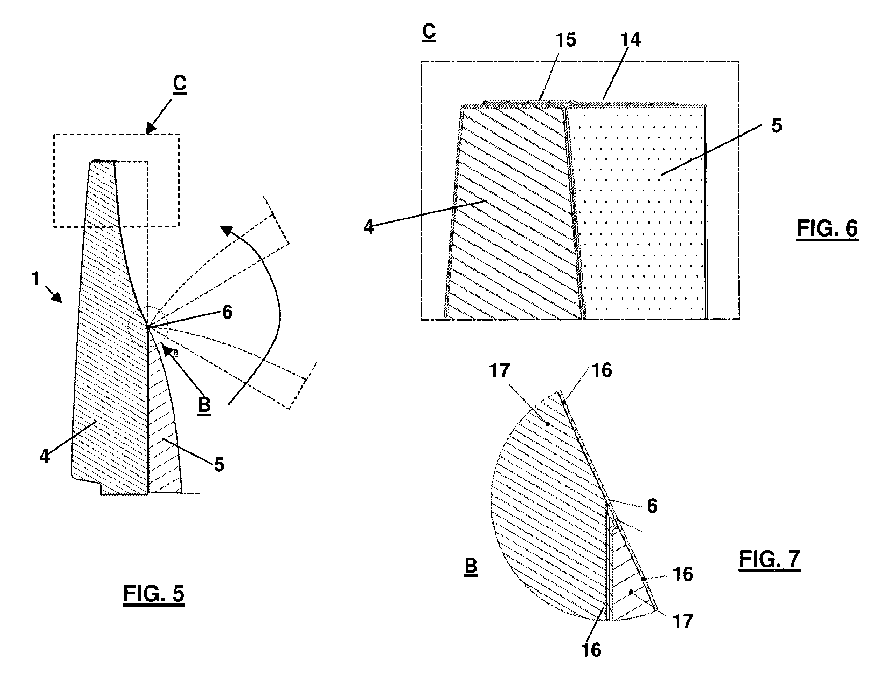

figure 5 shows a side section of the backrest;
figures 6 and 7 show magnifications of parts B and C in figure 5, respectively.

The same reference numbers in the figures identify the same elements.

In the figures, numeral 1 indicates a removable backrest object of the invention which may be positioned inside cab 2 of an industrial vehicle, e.g. in vertical position in a side compartment 3 of the cab.

Removable backrest 1 consists of two parts: one larger volume part 4 and one smaller volume part 5. The two parts are connected together on an intermediate front line 6, and smaller volume part 5 is hinged and may turn about this line 6, so that when it is turned upwards it fills the retraction space of the shape of larger volume part 4, so as to mate with this and form a parallelepiped.

Indeed, larger volume part 4 presents an essentially parallelepiped-spaced lower part 7, and an upper part 8 whose thickness presents a concave curve trend starting from a maximum central thickness along intermediate line 6, to a minimum thickness along upper edge 9.

If the intermediate front line 6 is median, smaller volume part 5 has a height equal to half the height of larger volume part 4, and a thickness which presents a convex curved trend, complementary to the concave curved trend of the thickness of upper part 8 of larger volume part 4, starting from a nearly null thickness at intermediate line 6, to a maximum thickness on lower line 10, so that when it is turned upwards on hinging line 6, front face 5' of the smaller volume part mates with front face 8' of the larger volume part.

When smaller volume part 5 is turned upwards, the removable backrest essentially assumes the shape of a regular parallelepiped, because the volume of smaller part 5 fills the vacuum of the larger volume part 4, thus obtaining smaller front dimensions of the backrest. In this manner, if the backrest is positioned in a side recess 3 of cab 2, it does not obstruct the tipping of a rear bed or of a part 11 thereof, arranged nearby.

On edge 10 of lower side of smaller volume part 5 there are present extensions 14 of Velcro tape, e.g. male Velcro, which, when the smaller volume part is tipped upwards, are fastened on the equivalent parts of Velcro tape 15, e.g. female Velcro, present on the upper side of the larger volume part 4, thus retaining the smaller volume part.

When smaller volume part 5 is turned downwards, the removable backrest assumes a front essentially concave/convex-shaped front profile, thicker downwards and thinner upwards, for an optimal resting of the back of the person using it.

Removable backrest 1 is fixed to inner side 3 of cab 2 by means of a fastening system to a hook 12, for example a clothes hook, so that the backrest may be released and used also in other parts of the cab. For the purpose, a handle 13 is fixed onto the upper part of backrest 1 and may be inserted in hook 12 as a clip

Advantageously, the two parts of removable backrest 1 are provided with cover 16, e.g. fabric, and padding 17, e.g. foam. Hinges (not shown in the figures) are present on the two parts of backrest 4, 5 so that padding 17 may be inserted and removed.

Other possible construction variants of the described non-limitative example are possible, without because of this departing from the scope of protection of the present invention, comprising all the equivalent implementations for a person skilled in the art.

From the above-mentioned description, a person skilled in the art will be capable of implementing the object of the invention without introducing further constructive details.

## Claims

1. A removable backrest for vehicle cab interior, especially industrial or commercial vehicle,
**characterised in that** it essentially consists of two parts, one larger volume part (4) and one smaller volume part (5);
said parts being connected together on an intermediate front line (6);
said smaller volume part (5) being hinged and able to turn about said intermediate front line (6), so that when it is turned upwards it fills the retraction space of the shape of said larger volume part (4), so as to mate with the latter.

2. A removable backrest according to claim 1, **characterised in that** the larger volume part (4)..presents an essentially parallelepiped-spaced lower part (7), and an upper part (8) whose thickness presents a concave curved course starting from a maximum central thickness along said intermediate line (6), to a minimum thickness along the upper edge (9).

3. A removable backrest according to claim 2, **characterised in that** said smaller volume part (5) has a thickness which presents a convex curved trend, complementary to the concave curved trend of the thickness of said upper part (8) of the larger volume part (4), starting from a nearly null thickness at said intermediate line (6), to a maximum thickness on a lower line (10), so that when it turns upwards on said front intermediate line (6), the front face (5') of the smaller volume part mates with the front face (8') of the larger volume side.

4. Removable backrest according to claim 3, **characterised in that** the edge (10) of the lower side of said smaller volume part (5) comprises extensions of. Velcro tape (14), which, when said smaller volume part (5) is tipped, upwards is fastened on equivalent parts of Velcro tape (15), fastened on the upper side of said larger volume part (4).

5. A removable backrest according.to claim 1, **characterised in that** it assumes a front essentially convex/concave shaped front profile when said smaller volume part (5) is turned downwards, thicker downwards and thinner upwards, while it assumes an essentially parallelepiped shape when said smaller volume (5) is turned upwards.

6. A removable backrest according to one or more of the preceding claims, **characterised in that** said two parts of the removable backrest are provided with cover (16) and padding (17).

7. A removable backrest according to any of the preceding claims, **characterised in that** it comprises a handle (13) fixed onto the upper part of said backrest (1).

8. A vehicle cab, especially industrial or commercial vehicle, **characterised in that** it comprises a compartment (3) accommodating a removable backrest as in any of the preceding claims.

9. A vehicle cab according to claim 8, **characterised in that** it comprises in said compartment (3) a hook (12) adapted to fasten said handle (13) for stopping said removable backrest.

## Patentansprüche

1. Abnehmbare Rückenlehne für einen Fahrzeugkabineninnenraum, insbesondere ein industrielles oder gewerbliches Fahrzeug,
**dadurch gekennzeichnet , dass**
sie im Wesentlichen aus zwei Teilen besteht, einem größervolumigen Teil (4) und einem kleinervolumigen Teil (5); wobei die Teile an einer dazwischenliegenden Vorderlinie (6) miteinander verbunden sind; wobei das kleinervolumige Teil (5) an der dazwischenliegenden Vorderlinie (6) angelenkt und in der Lage ist, um diese zu schwenken, so dass, wenn es aufwärts geschwenkt ist, es den Einziehraum der Form des größervolumigen Teils (4) füllt, um so mit diesem zusammenzupassen.

2. Abnehmbare Rückenlehne nach Anspruch 1,
**dadurch gekennzeichnet , dass**
das größervolumige Teil (4) ein im Wesentlichen parallelepipedförmig beabstandetes unteres Teil (7) und ein oberes Teil (8) aufweist, dessen Dicke einen konkaven gekrümmten Verlauf beginnend von einer maximal zentralen Dicke entlang der Zwischenlinie (6) zu einer minimalen Dicke entlang des oberen Randes (9) aufweist.

3. Abnehmbare Rückenlehne nach Anspruch 2,
**dadurch gekennzeichnet, dass**
das kleinervolumige Teil (5) eine Dicke aufweist, die einen konvexen gekrümmten Trend komplementär zu dem konkaven gekrümmten Trend der Dicke des oberen Teils (8) des größervolumigen Teils (4) beginnend von einer Dicke von nahezu Null an der Zwischenlinie (6) zu einer maximalen Dicke an einer unteren Linie (10) aufweist, so dass, wenn es an der vorderen Zwischenlinie (6) aufwärts geschwenkt wird, die Vorderseite (5') des kleinervolumigen Teils mit der Vorderseite (8') der größervolumigen Seite zusammenpasst.

4. Abnehmbare Rückenlehne nach Anspruch 3,
**dadurch gekennzeichnet, dass**
der Rand (10) der unteren Seite des kleinervolumigen Teils (5) Verlängerungen aus Velcro-Band (14) umfasst, die, wenn das kleinervolumige Teil (5) aufwärts gestellt wird, an äquivalenten Teilen aus Velcro-Band (15) befestigt werden, die an der oberen Seite des größervolumigen Teils (4) befestigt sind.

5. Abnehmbare Rückenlehne nach Anspruch 1,
**dadurch gekennzeichnet, dass**
sie ein vorderes im Wesentlichen konvex-/konkav-förmiges Vorderprofil annimmt, wenn das kleinervolumige Teil (5) abwärts geschwenkt wird, abwärts dicker und aufwärts dünner, während es im Wesentlichen eine Parallelepipedform annimmt, wenn das kleinere Volumen (5) aufwärts geschwenkt wird.

6. Abnehmbare Rückenlehne nach einem der vorhergehenden Ansprüche,
**dadurch gekennzeichnet, dass**
die beiden Teile der abnehmbaren Rückenlehne mit einer Abdeckung (16) und einer Polsterung (17) versehen sind.

7. Abnehmbare Rückenlehne nach einem der vorhergehenden Ansprüche,
**dadurch gekennzeichnet , dass**
sie einen Griff (13) umfasst, der an dem oberen Teil der Rückenlehne (1) angebracht ist.

8. Fahrzeugkabine, insbesondere industrielles oder gewerbliches Fahrzeug,
**dadurch gekennzeichnet , dass**
sie ein Fach (3) umfasst, das eine abnehmbare Rückenlehne nach einem der vorhergehenden Ansprüche aufnimmt.

9. Fahrzeugkabine nach Anspruch 8,
**dadurch gekennzeichnet , dass**
sie in dem Fach (3) einen Haken (12) umfasst, der derart angepasst ist, den Griff (13) zum Stoppen der abnehmbaren Rückenlehne zu befestigen.

## Revendications

1. Dossier amovible pour l'intérieur d'une cabine de véhicule, en particulier un véhicule industriel commercial,
caractérisé en qu'il consiste essentiellement en deux parties, une partie de volume plus grand (4) et une partie de volume plus petit (5) ;
lesdites parties étant reliées ensemble sur une ligne avant intermédiaire (6) ;
ladite partie de volume plus petit (5) étant articulée et pouvant tourner autour de ladite ligne avant intermédiaire (6), de sorte que lorsqu'elle est tournée vers le haut, elle remplit l'espace de rétraction de la forme de ladite partie de volume plus grand (4), de façon à se coupler avec cette dernière.

2. Dossier amovible selon la revendication 1, **caractérisé en ce que** la partie de volume plus grand (4) présente une partie inférieure espacée essentiellement en forme de parallélépipède (7), et une partie supérieure (8) dont l'épaisseur présente un tracé courbé concave partant d'une épaisseur centrale maximale le long de ladite ligne intermédiaire (6) vers une épaisseur minimale le long du bord supérieur (9).

3. Dossier amovible selon la revendication 2, **caractérisé en ce que** ladite partie de volume plus petit (5) a une épaisseur qui présente une tendance courbée convexe, complémentaire à la tendance courbée concave de l'épaisseur de ladite partie supérieure (8) de la partie de volume plus grand (4), en partant d'une épaisseur presque nulle au niveau de ladite ligne intermédiaire (6) vers une épaisseur maximale sur une ligne inférieure (10) de sorte que lorsqu'elle se tourne vers le haut sur ladite ligne intermédiaire avant (6), la face avant (5') de la partie de volume plus petit se couple avec la face avant (8') du côté de volume plus grand.

4. Dossier amovible selon la revendication 3, **caractérisé en ce que** le bord (10) du côté inférieur de ladite partie de volume plus petit (5) comprend des extensions de bande Velcro (14), qui, lorsque ladite partie de volume plus petit (5) est inclinée vers le haut, est fixée sur des parties équivalentes de bande Velcro (15), fixée sur le côté supérieur de ladite partie de volume plus grand (4).

5. Dossier amovible selon la revendication 1, **caractérisé en ce qu'**il prend un profil avant de forme essentiellement concave/convexe lorsque ladite partie de volume plus petit (5) est tournée vers le bas, plus épais vers le bas et plus fin vers le haut, alors qu'il prend une forme essentiellement parallélépipédique lorsque ledit volume plus petit (5) est tourné vers le haut.

6. Dossier amovible selon une ou plusieurs des revendications précédentes, **caractérisé en ce que** lesdites deux parties du dossier amovible sont dotées d'une housse (16) et d'un rembourrage (17).

7. Dossier amovible selon l'une quelconque des revendications précédentes, **caractérisé en ce qu'**il comprend une poignée (13) fixée sur la partie supérieure dudit dossier (1).

8. Cabine de véhicule, en particulier de véhicule industriel ou commercial, **caractérisée en ce qu'**elle comprend un compartiment (3) logeant un dossier amovible selon l'une quelconque des revendications précédentes.

9. Cabine de véhicule selon la revendication 8, **caractérisé en ce qu'**elle comprend dans ledit compartiment (3) un crochet (12) adapté pour fixer ladite poignée (13) afin d'arrêter ledit dossier amovible.
